(19) Europäisches Patentamt
European Patent Office
Office européen des brevets

(11) **EP 1 640 375 B1**

(12) **EUROPÄISCHE PATENTSCHRIFT**

(45) Veröffentlichungstag und Bekanntmachung des Hinweises auf die Patenterteilung:
**14.03.2007 Patentblatt 2007/11**

(51) Int Cl.:
***C07F 7/16*** *(2006.01)*

(21) Anmeldenummer: **05020015.3**

(22) Anmeldetag: **14.09.2005**

(54) **Verfahren zur Herstellung von Methylchlorsilanen**

Process for manufacturing methylchlorsilanes

Procédé de fabrication de méthylchlorosilanes

(84) Benannte Vertragsstaaten:
**BE DE FR GB NL PL**

(30) Priorität: **23.09.2004 DE 102004046181**

(43) Veröffentlichungstag der Anmeldung:
**29.03.2006 Patentblatt 2006/13**

(73) Patentinhaber: **Wacker Chemie AG**
**81737 München (DE)**

(72) Erfinder:
• **Kalchauer, Wilfried, Dr.**
**84489 Burghausen (DE)**

• **Groß, Jochen**
**84577 Tüßling (DE)**

(74) Vertreter: **Fritz, Helmut et al**
**Wacker Chemie AG**
**Zentralbereich Patente, Marken und Lizenzen**
**Hanns-Seidel-Platz 4**
**81737 München (DE)**

(56) Entgegenhaltungen:
**US-A- 5 512 662        US-A- 5 625 088**

**Beschreibung**

Die Erfindung betrifft ein Verfahren zur Direktsynthese von Dimethyldichlorsilan mit einer Kontaktmasse, welche Strontium enthält.

Verfahren zur Herstellung von Methylchlorsilanen durch Umsetzung von Silicium mit Chlormethan in der Direktsynthese nach Müller-Rochow in Gegenwart von geeigneten Katalysatoren und Katalysatorkombinationen sind bereits bekannt. Beispielsweise ist das in "Catalyzed Direct Reactions of Silicon; K.M. Lewis, D.G. Rethwisch; Elsevier 1993" beschrieben.

Bei der Direktsynthese von Methylchlorsilanen wird metallisches Silicium mit Chlormethan in Gegenwart von verschiedenen Katalysatoren und gegebenenfalls Promotoren umgesetzt, wobei das Zielprodukt Dimethyldichlorsilan ist. Die Mischung aus Silicium, Katalysatoren und Promotoren wird als Kontaktmasse bezeichnet. Weltweit werden derzeit jährlich über 1.500.000 Tonnen Dimethyldichlorsilan hergestellt, d.h. kleine Verbesserungen im Herstellungsprozess, wie beispielsweise Erhöhung der Dimethydichlorsilan-Selektivität, Erhöhung der Dimethydichlorsilan spezifischen Raum-/Zeit-Ausbeute oder Erhöhung der spezifischen Siliciumausbeute haben dadurch eine große wirtschaftliche Auswirkung.

In FR 1037183 und EP 195728 ist der Zusatz von Sr bei der Direktsynthese in der Kontaktmasse beschrieben. FR 1037183 nennt 1 - 5 Gew.-% Sr, EP 195728 A beschreibt Sr in einer Konzentration von etwa 0,01 bis 2 Gew.-%, wobei als möglicher Katalysator Cu, CuCl oder $CuCl_2$ genannt wird. Diese hohe Konzentration an Sr wirken sich in Bezug auf die Bildung von Dimethyldichlorsilan nicht günstig aus.

Aufgabe der vorliegenden Erfindung war es, ein Verfahren zur Direktsynthese von Methylchlorsilanen nach Müller-Rochow bereitzustellen, welches in Bezug auf die Herstellung von Dimethyldichlorsilan Verbesserungen aufweist.

Gegenstand der Erfindung ist ein Verfahren zur Direktsynthese von Dimethyldichlorsilan durch Umsetzung von Chlormethan mit einer Kontaktmasse, welche Silicium, Kupferkatalysator und 10 bis 90 ppm Strontium enthält.

Es wurde gefunden, dass sich ein Strontiumgehalt in der Kontaktmasse von 10 bis 90 ppm, bevorzugt 20 bis 60 ppm, insbesondere 30 bis 50 ppm positiv auf die spezifische Dimethyldichlorsilan-Bildungsrate, der Bildung von $Me_2SiCl_2$ je Masse eingesetztes Silicium und Zeiteinheit, auswirkt.

Der Strontiumgehalt in der Kontaktmasse wird vorzugsweise durch geeignete Maßnahmen gezielt eingestellt. Strontium kann als Metall, Legierung, oder Verbindung der Kontaktmasse zugegeben werden oder bevorzugt mit den Rohstoffen wie Silicium und Katalysatoren in die Kontaktmasse eingebracht werden. In letzterem Fall wird unabhängig vom Sr-Gehalt in den Rohstoffen die Konzentration an Sr in der Kontaktmasse über die betrieblichen Parameter der Methylchlorsilan-Synthese gesteuert. Betriebliche Parameter sind in diesem Fall beispielsweise das Verhältnis aus zugeführten, frischen Rohstoffen zu, aus dem System ausgeschleusten, siliciumhaltigen Feststoffen, wie beschrieben in "Catalyzed Direct Reactions of Silicon; K.M. Lewis, D.G. Rethwisch; Elsevier 1993", Seite 18, Abb. 3.

Das Verfahren kann diskontinuierlich oder kontinuierlich durchgeführt werden, in der industriellen Produktion wird nur die kontinuierliche Ausführungsform angewendet. Kontinuierlich bedeutet, daß die Menge an abreagiertem Silicium und mit dem Reaktionsstaub ausgetragenen Katalysatoren und Promotoren laufend nachdosiert werden, vorzugsweise als vorgemischte Kontaktmasse. Die kontinuierliche Direktsynthese wird bevorzugt in Wirbelschichtreaktoren durchgeführt, in denen Chlormethan gleichzeitig als Fluidisierungsmedium und Reaktant eingesetzt wird.

Das benötigte Silicium wird zuvor zu einem Pulver vermahlen und mit Kupferkatalysator und Promotoren zur Kontaktmasse vermischt. Vorzugsweise wird Silicium in einer Korngröße von höchstens 700 $\mu$m, besonders bevorzugt in einer Korngröße höchstens 500$\mu$m eingesetzt. Das eingesetzte Silicium weist üblicherweise einen Reinheitsgrad von > 98% auf.

Eine Produktionskampagne der kontinuierlichen Direktsynthese wird mit der Induktionsphase begonnen. Mit Beginn der Induktionsphase wird Methylchlorid in die erhitzte Kontaktmasse geleitet. Darauf folgt die Startphase, in welcher die Rohsilanbildung einsetzt. Die Reaktion läuft vorerst mit geringer Selektivität und Reaktivität ab. Anschließend wird die stabile Produktionsphase erreicht. Silicium und gegebenenfalls Katalysatoren und Promotoren/Co-Katalysatoren werden laufend nachdosiert. Die Produktionskampagne endet, wenn kein Chlormethan mehr in die Kontaktmasse eingeleitet wird.

Beim kontinuierlichen Betrieb eines Reaktors fallen in einer Produktionskampagne nach einer weitgehend stabilen Produktionsphase die Produktionsraten bezogen auf das Zielprodukt Dimethyldichlorsilan ab. Deshalb muß die Produktionskampagne nach einer bestimmten Zeit beendet werden. Eine Produktionskampagne dauert meist nur einige Tage bis mehrere Wochen. Der Reaktor wird nach Beendigung einer Produktionskampagne entleert, neu mit Silicium, Kupferkatalysator und Promotoren/Co-Katalysatoren befüllt und wieder auf Reaktionsbedingungen gebracht.

Bei der Direktsynthese verlassen nicht umgesetztes Chlormethan, die gasförmigen Methylchlorsilane und gegebenenfalls mitgerissene Partikel den Reaktor. Die mitgerissenen Partikel bestehen aus abreagierten Siliciumkörnen, feinen Siliciumkörnern, Katalysatoren und Promotoren/Co-Katalysatoren. Über einen oder mehrere Cyclone kann man, falls erwünscht, die mitgerissenen Partikel vom Gasstrom abtrennen, wobei große mitgerissene Partikel aus der Kontaktmasse wieder in den Reaktor zurückgeführt werden können. Das Silan wird anschließend von restlichen Staubanteilen und nicht umgesetzten Chlormethan abgetrennt und einer Destillation zugeführt. Gereinigtes, nicht umgesetztes Chlormethan kann wieder in den Reaktor eingespeist werden.

Das Verfahren wird bevorzugt in einem Wirbelschichtreaktor, vorzugsweise im Temperaturbereich von 250 bis 400°C, insbesondere bei 250 bis 360°C durchgeführt. Weil dies den geringsten Aufwand erfordert, wird das Verfahren meist beim Druck der umgebenden Atmosphäre, also bei etwa 0,1 MPa bis 0,5 MPa durchgeführt, es können aber auch höhere Drücke angewandt werden.

Beim Verfahren können auch Inertgase wie beispielsweise Stickstoff oder Argon eingesetzt werden. Vorzugsweise wird kein Inertgas verwendet.

Die Menge des Gasstromes wird in einer bevorzugten Ausführungsform so gewählt, daß im Reaktor eine Wirbelschicht aus Kontaktmasse und Gas gebildet wird. Nicht umgesetztes Chlormethan und gegebenenfalls Inertgas und die gasförmigen Methylchlorsilane verlassen den Reaktor. Die Zubereitung der Kontaktmasse erfolgt durch einfaches Mischen der Einzelkomponenten bei Raumtemperatur. Eine Behandlung der Kontaktmasse vor dem Einbringen in den Reaktor ist möglich, wird aber in der bevorzugten Ausführungsform nicht durchgeführt.

Beim erfindungsgemäßen Verfahren wird (a) die Form des Kupfers vorzugsweise ausgewählt aus metallischem Kupfer, Kupferlegierungen, Kupferoxid und Kupferchlorid. Kupferoxid kann beispielsweise Kupfer in Form von Kupferoxid-Gemischen und in Form von Kupfer(II)oxid sein. Kupferchlorid kann in Form von CuCl oder in Form von $CuCl_2$ eingesetzt werden, wobei auch entsprechende Mischungen möglich sind. In einer bevorzugten Ausführungsform wird das Kupfer als Kupferoxid und/oder als CuCl eingesetzt.

Vorzugsweise werden 0,3 bis 10 Gew.%, insbesondere 0,5 bis 7 Gew.% Kupferkatalysator, bezogen auf metallisches Kupfer und Silicium verwendet, besonders bevorzugt sind 0,5 bis 4,5 Gew.%.

Beim erfindungsgemäßen Verfahren können Promotoren eingesetzt werden, die vorzugsweise ausgewählt werden aus Zink, Phosphor, Cäsium, Barium, Eisen, Zinn und Antimon.

Zink wird vorzugsweise in Form von metallischem Zink, auch als Legierung mit Kupfer und gegebenenfalls weiteren Promotoren, Zinkoxid, oder Zinkchlorid eingesetzt. Die Menge an eingesetztem Zink beträgt vorzugsweise 0,05 bis 60 Gew.%, insbesondere 0,3 bis 40 Gew.%, bezogen auf Kupfer und Zink als Metall, besonders bevorzugt sind 0,5 bis 10 Gew.%.

Antimon und/oder Zinn werden vorzugsweise zusammen mit Zink eingesetzt. Antimon und/oder Zinn werden vorzugsweise als Metalle oder Legierungen eingesetzt. Die Menge an eingesetztem Antimon und/oder Zinn beträgt bevorzugt in Summe 200 bis 8000 ppm, insbesondere 300 bis 4000 ppm, bezogen aus das eingesetzte Kupfer, berechnet als Metall, besonders bevorzugt sind 500 bis 3000 ppm Antimon und/oder Zinn.

Bei einer bevorzugten Ausführungsform des Verfahrens wird mindestens eine der Katalysatorkomponenten Kupfer oder Zink in einer nicht metallischen Form eingesetzt, besonders bevorzugt ist jene Ausführungsform, bei der beide Katalysatorkomponenten in einer nicht metallischen Form zum Einsatz kommen.

In den nachfolgenden Beispielen sind, falls jeweils nicht anders angegeben,

    a) alle Mengen auf die Masse bezogen;
    b) alle Drücke 0,10 MPa (abs.);
    c) alle Temperaturen 20°C.

**Beispiele**

Die Ergebnisse bei der Umsetzung von Silicium mit Chlormethan in Gegenwart von geeigneten Katalysatoren hängen neben der Zusammensetzung der Kontaktmasse auch vom Aufbau der Versuchsanlage und der Versuchsdurchführung ab. Um die beiden letztgenannten Parameter zu eliminieren und um die Vorteile der Erfindung eindeutig aufzeigen zu können, wurden die in den nachstehenden Beispielen dargestellten Versuche nach folgender standardisierter Vorgehensweise durchgeführt.

Siliciumpulver: Käuflich erhältliches Siliciummetall mit folgenden Hauptverunreinigungen: Al 0,20%, Fe 0,27%, Ca 0,04%; gemahlen und gesiebt auf eine Korngröße im Bereich von 70 bis 240 $\mu$m.

Kupferoxid: Hergestellt nach US-A-5,306,328, Beispiel 5.

Alle anderen Chemikalien sind im Chemikalienhandel käuflich erhältlich, z.B. bei Fluka Chemie GmbH, Deutschland. Versuchsanlage:

Labor-Wirbelschichtreaktor (senkrechtes Glasrohr mit einem Innendurchmesser von 25 mm und einer Höhe von 500 mm) mit Heizwicklung, Gasverteilerfritte, Destillationsbrücke mit Solekühlung und Vorlagekolben.

Standardisierte Vorgehensweise:

Kupferkatalysator, 0,8 g metallisches Zink als Cokatalysator, 8 mg Zinnpulver und $SrCl_2 \ast 6 \, H_2O$ werden innig vermischt, mit 120g Silicium durchmischt, in den Reaktor gefüllt und unter einem Stickstoffstrom von 40 1/h auf 340°C erwärmt. Anschließend werden 40 1/h Chlormethan durch den Reaktor geleitet und die Kontaktmasse auf 395°C erwärmt. Nach einer Induktionszeit im Bereich von 2 bis 30 Minuten beginnt die Silanbildung, die Reaktionstemperatur wird auf 360°C reduziert und 50 ml Methylchlorsilane werden aufgefangen (Startphase). Anschließend werden weitere 30 ml Methylchlorsilane gesammelt. Die Zeit zur Bildung dieser 30 ml Silane wird als Produktionsphase bezeichnet, die Produktionsrate (PR2) errechnet sich nach der Formel

$$PR2 = \frac{\text{g Methylchlorsilane in der Produktionsphase}}{\text{kg eingesetztes Si x Stunden für die Produktionsphase}}$$

$$\text{Die spezifische Dimethyldichlorsilan-Bildungsrate (BRM2)} = \frac{PR2 \text{ x Konzentration an Dimethydichlorsilan im Rohsilan}}{100}$$

Die Silanzusammensetzung der 30 ml Methylchlorsilane wurde mittels GC-Analyse in Gewichtsprozent ermittelt.

Nicht erfindungsgemässe Beispiele 1 bis 4:

Zu geringe und zu hohe Sr Mengen in der Kontaktmasse wirken sich negativ auf die spezifische Dimethydichlorsilanbildung BRM2 aus.

| Beispiel | g [Cu] | ppm [Sr] | PR2 | % Silan M2 | BRM2 |
|---|---|---|---|---|---|
| 1 | 6 g CuO | 0 | 283 | 81,8 | 231 |
| 2 | 6 g CuO | 1000 | 205 | 81,8 | 168 |
| 3 | 7,6 g CuCl | 0 | 336 | 82,2 | 276 |
| 4 | 7,6 g CuCl | 1000 | 276 | 82,3 | 227 |

Beispiele 5 bis 10:

Bei vergleichbaren Cu-Katalysatoren ist die spezifische $Me_2SiCl_2$-Bildungsrate BRM2 bei Anwesenheit von Sr im erfindungsgemässen Bereich erhöht .

| Beispiel | g [Cu] | ppm [Sr] | PR2 | % Silan M2 | BRM2 |
|---|---|---|---|---|---|
| 5 | 6 g CuO | 25 | 284 | 82,8 | 235 |
| 6 | 6 g CuO | 50 | 282 | 84,3 | 238 |
| 7 | 6 g CuO | 90 | 277 | 83,9 | 232 |
| 8 | 7,6 g CuCl | 25 | 389 | 86,0 | 335 |
| 9 | 7,6 g CuCl | 50 | 365 | 86,1 | 314 |
| 10 | 7,6 g CuCl | 90 | 352 | 86,7 | 305 |

**Patentansprüche**

1.    Verfahren zur Direktsynthese Dimethyldichlorsilan durch Umsetzung von Chlormethan mit einer Kontaktmasse, welche Silicium, Kupferkatalysator und 10 bis 90 ppm Strontium enthält.

2.    Verfahren nach Anspruch 1, wobei Strontium mit den Rohstoffen, die ausgewählt werden aus Silicium und Katalysatoren, in die Kontaktmasse eingebracht wird.

3. Verfahren nach Anspruch 1 oder 2, bei dem die Form des Kupfers aus metallischem Kupfer, Kupferlegierungen, Kupferoxid und Kupferchlorid ausgewählt wird.

4. Verfahren nach Anspruch 1 bis 3, bei dem Zink als Promotor eingesetzt wird.

5. Verfahren nach Anspruch 4, bei dem neben Zink weitere Promotoren eingesetzt werden, die ausgewählt werden aus Zinn und Antimon.

**Claims**

1. Process for the direct synthesis of dimethyldichlorosilane by reaction of chloromethane with a contact composition comprising silicon, copper catalyst and from 10 to 90 ppm of strontium.

2. Process according to claim 1, wherein strontium is introduced into the contact composition with the raw materials which are selected from among silicon and catalysts.

3. Process according to claim 1 or 2, wherein the form of the copper is selected from among metallic copper, copper alloys, copper oxide and copper chloride.

4. Process according to any of claims 1 to 3, wherein zinc is used as promoter.

5. Process according to claim 4, wherein further promoters selected from among tin and antimony are used in addition to zinc.

**Revendications**

1. Procédé de synthèse directe de diméthyldichlorosilane par réaction de chlorométhane avec une masse de contact, qui contient du silicium, un catalyseur au cuivre et de 10 à 90 ppm de strontium.

2. Procédé suivant la revendication 1, dans lequel du strontium est introduit dans la masse de contact avec les matières premières, qui sont choisies parmi le silicium et des catalyseurs.

3. Procédé suivant la revendication 1 ou 2, dans lequel la forme du cuivre est choisie parmi du cuivre métallique, des alliages de cuivre, de l'oxyde de cuivre et du chlorure de cuivre.

4. Procédé suivant les revendications 1 à 3, dans lequel on met en oeuvre du zinc en tant que promoteur.

5. Procédé suivant la revendication 4, dans lequel, outre du zinc, on met en oeuvre d'autres promoteurs, choisis parmi l'étain et l'antimoine.